# EUROPÄISCHE PATENTSCHRIFT

(11) **EP 3 999 750 B1**
(45) Veröffentlichungstag und Bekanntmachung des Hinweises auf die Patenterteilung: **30.08.2023**
(21) Anmeldenummer: 20731465.9
(22) Anmeldetag: 08.06.2020
(51) Int. Cl.: F16C 17/03, F16C 17/06, F16C 17/26

(54) **KIPPSEGMENTLAGER**
TILTING-PAD BEARING
PALIER À PATINS OSCILLANTS

(30) Priorität: 18.07.2019 DE 102019210660
(43) Veröffentlichungstag der Anmeldung: 25.05.2022
(73) Patentinhaber: Robert Bosch GmbH, 70442 Stuttgart (DE)
(72) Erfinder: SCHUELKE, Armin, 71134 Aidlingen (DE)
(86) Internationale Anmeldenummer: PCT/EP2020/065828
(87) Internationale Veröffentlichungsnummer: WO 2021/008778

(56) Entgegenhaltungen:
- WO-A1-88/09443
- WO-A1-2015/157053

## Beschreibung

Die Erfindung betrifft ein Kippsegmentlager mit Kippsegmenten und mit einem Gehäusekörper, wobei die Kippsegmente relativ zu dem Gehäusekörper kippbar sind, um zwischen den Kippsegmenten und einem Rotorkörper Lagerspalte zu erzeugen. Die Erfindung betrifft des Weiteren ein Verfahren zum Herstellen eines derartigen Kippsegmentlagers.

### Stand der Technik

Durch die WO 2015/157053 A1, die die Merkmale des Oberbegriffs von Anspruch 1 offenbart, ist ein Kippsegmentlager bekannt, das Kippsegmente und einen Gehäusekörper aufweist, wobei die Kippsegmente relativ zu dem Gehäusekörper kippbar sind, um zwischen den Kippsegmenten und einem Rotorkörper Lagerspalte zu erzeugen. Die Kippsegmente sind einstückig mit einem flächigen, biegsamen Traggebilde verbunden.

Durch die WO 88/09443 A1 ist ein Kippsegmentlager bekannt, das Kippsegmente und einen Gehäusekörper aufweist, wobei die Kippsegmente relativ zum dem Gehäusekörper kippbar sind, um zwischen den Kippsegmenten und einem Rotorkörper Lagerspalte zu erzeugen. Die Kippsegmente sind einstückig mit dem Gehäusekörper verbunden.

Aus der europäischen Patentschrift EP 3 260 716 B1 ist ein Kippsegmentlager bekannt, aufweisend: ein Kippsegment, welches ein Stiftelement aufweist; eine Hülse, wobei die Hülse wenigstens eine Stiftelementaufnahme mit einer Aussparung in Umfangsrichtung aufweist; wobei das Stiftelement in der Aussparung aufnehmbar ist, wobei das Stiftelement entlang der Aussparung in Umfangsrichtung bewegbar ist zum Einstellen wenigstens eines Spalts des Kippsegments.

### Offenbarung der Erfindung

Aufgabe der Erfindung ist es, ein Kippsegmentlager mit Kippsegmenten, die relativ zu einem Gehäusekörper kippbar sind, um zwischen den Kippsegmenten und einem Rotorkörper Lagerspalte zu erzeugen, im Hinblick auf seine Herstellbarkeit zu verbessern.

Die Aufgabe ist bei einem Kippsegmentlager mit Kippsegmenten, die relativ zu einem Gehäusekörper kippbar sind, um zwischen den Kippsegmenten und einem Rotorkörper Lagerspalte zu erzeugen, dadurch gelöst, dass die Kippsegmente an mehr als einer Verbindungsstelle einstückig mit dem flächigen, biegsamen Traggebilde verbunden sind. Dadurch wird auf einfache Art und Weise eine stabilere Anbindung der Kippsegmente an das flächige, biegsame Traggebilde ermöglicht. Darüber hinaus wird durch die Verwendung von mehr als einer einstückigen Verbindung zwischen den Kippsegmenten und dem Traggebilde eine gewünschte Anordnung oder Stellung des jeweiligen Kippsegments relativ zu dem flächigen, biegsamen Traggebilde in dem Gehäusekörper relativ zu dem Rotorkörper vereinfacht.

Das Kippsegmentlager umfasst mindestens drei Kippsegmente. Besonders bevorzugt umfasst das Kippsegmentlager genau drei Kippsegmente. Die einstückigen Verbindungen zwischen den Kippsegmenten und dem flächigen, biegsamen Traggebilde umfassen zum Beispiel mindestens ein Festkörpergelenk, insbesondere ein Drehgelenk. Das beanspruchte Kippsegmentlager kann als Radiallager, aber auch als Axiallager, ausgeführt sein. Bei herkömmlichen Kippsegmentlagern sind die Kippsegmente zum Beispiel stoffschlüssig mit einem Lagerring verbunden. Die Kippsegmente können aber auch als separate Einzelteile ausgeführt sein, die in einen Außenring oder Lagerring eingelegt sind. Das flächige, biegsame Traggebilde, mit dem die Kippsegmente einstückig verbunden sind, liegt bei dem beanspruchten Kippsegmentlager vorteilhaft an dem Gehäusekörper an. Dadurch wird die thermische Anbindung der Kippsegmente an dem Gehäusekörper erheblich verbessert. Das liefert unter anderem den Vorteil, dass die Kippsegmente im Betrieb des Kippsegmentlagers nicht so heiß werden, wie bei herkömmlichen Kippsegmentlagern. So wird auf einfache Art und Weise sichergestellt, dass eine zulässige Werkstofftemperatur eines Werkstoffs, aus dem die Kippsegmente und das flächige, biegsame Traggebilde gebildet sind, nicht überschritten wird. Darüber hinaus vereinfacht sich die Herstellung des Kippsegmentlagers durch die einstückigen Verbindungen zwischen den Kippsegmenten und dem flächigen, biegsamen Traggebilde erheblich. Wenn das Kippsegmentlager als Radiallager ausgeführt ist, dann kann das flächige, biegsame Traggebilde zum Beispiel die Gestalt eines Rechtecks aufweisen. Das rechteckige, flächige, biegsame Traggebilde wird bei der Herstellung in die Gestalt eines geraden Kreiszylindermantels gebracht. Dieses kreiszylindermantelförmige flächige, biegsame Traggebilde wird dann in eine entsprechende Aufnahme des Gehäusekörpers eingebracht. Wenn das Kippsegmentlager als Axiallager ausgeführt ist, dann hat das flächige, biegsame Traggebilde zum Beispiel die Gestalt einer Kreisscheibe. Das flächige, biegsame Traggebilde, das einstückig mit den Kippsegmenten verbunden ist, hat vorzugsweise eine Dicke, die größer als 0,5 Millimeter ist. In Abhängigkeit von der Größe eines Durchmessers des Rotorkörpers, insbesondere einer Welle, hat das flächige, biegsame Traggebilde vorzugsweise eine Dicke zwischen einem und drei Millimeter.

Ein bevorzugtes Ausführungsbeispiel des Kippsegmentlagers ist dadurch gekennzeichnet, dass die einstückigen Verbindungen zwischen den Kippsegmenten und dem flächigen, biegsamen Traggebilde mindestens einen Biegebalken umfassen. Über den Biegebalken kann ein Kippsegment so an das flächige, biegsame Traggebilde angebunden werden, dass das Kippsegment im Betrieb des Kippsegmentlagers den gewünschten Lagerspalt zwischen dem Kippsegment und dem Rotorkörper erzeugt. Über den Biegebalken kann das jeweilige Kippsegment zum Beispiel in eine gewünschte Lage relativ zu dem Rotorkörper vorgespannt werden.

Ein weiteres bevorzugtes Ausführungsbeispiel des Kippsegmentlagers ist dadurch gekennzeichnet, dass die einstückigen Verbindungen zwischen den Kippsegmenten und dem flächigen, biegsamen Traggebilde mindestens einen Torsionsbalken umfasst. Über den Torsionsbalken kann ein Kippsegment so an das flächige, biegsame Traggebilde angebunden werden, dass das Kippsegment im Betrieb des Kippsegmentlagers den gewünschten Lagerspalt zwischen dem Kippsegment und dem Rotorkörper erzeugt. Über den Torsionsbalken kann das jeweilige Kippsegment zum Beispiel in eine gewünschte Lage relativ zu dem Rotorkörper vorgespannt werden.

Ein weiteres bevorzugtes Ausführungsbeispiel des Kippsegmentlagers ist dadurch gekennzeichnet, dass das flächige, biegsame Traggebilde aus einem Blechmaterial gebildet ist. Bei dem Blechmaterial, aus dem das flächige, biegsame Traggebilde gebildet ist, handelt es sich zum Beispiel um eine einfache, strukturierte Blechscheibe oder Blechplatte beziehungsweise um ein Blechbiegeteil, das die Aufnahme des Kippsegmentlagers übernimmt. Abgesehen von den Kosten für eine gegebenenfalls notwendige Feinbearbeitung sind die Herstellkosten gegenüber den Herstellkosten von herkömmlichen Kippsegmentlagern verschwindend gering. Anstelle einer Blechscheibe oder einer Blechplatte kann als Ausgangsmaterial auch ein Rohrmaterial verwendet werden. Das Rohrmaterial wird zum Beispiel durch Laserbearbeitung radial strukturiert.

Ein weiteres bevorzugtes Ausführungsbeispiel des Kippsegmentlagers ist dadurch gekennzeichnet, dass die einstückigen Verbindungen zwischen den Kippsegmenten und dem flächigen, biegsamen Traggebilde eine definierte Nachgiebigkeit und/oder eine definierte Drehsteifigkeit aufweist. Die einstückigen Verbindungen zwischen den Kippsegmenten und dem flächigen, biegsamen Traggebilde können im Hinblick auf ihre Geometrie bei der Herstellung auf einfache Art und Weise variiert werden. Je nach gewählter Geometrie kann mit dem beanspruchten Kippsegmentlager die Nachgiebigkeit der einzelnen Kippsegmente und/oder die Drehsteifigkeit der Kippsegmente über deren Aufhängung an der einstückigen Verbindungsstelle eingestellt werden. Die Kippsegmente, die auch als Lagerpads ausgeführt und bezeichnet werden, können gegenüber der jeweiligen Grundstruktur des Gehäusekörpers, insbesondere einer scheibenförmigen Grundstruktur oder einer kreiszylindermantelförmigen Grundstruktur, leicht versetzt oder angestellt werden, so dass nur die Kippsegmente oder Lagerpads einen zum Beispiel als Welle oder Wellenbund ausgeführten Rotorkörper tragen.

Ein weiteres bevorzugtes Ausführungsbeispiel des Kippsegmentlagers ist dadurch gekennzeichnet, dass die Kippsegmente so versetzt an das flächige, biegsame Traggebilde angebunden sind, dass im Betrieb des Kippsegmentlagers nur die Kippsegmente den Rotorkörper tragen. So versetzt bedeutet im Hinblick auf die Anbindung der Kippsegmente an das flächige, biegsame Traggebilde, dass die Kippsegmente über die beanspruchte einstückige Verbindung mit dem flächigen, biegsamen Traggebilde ähnlich gut wie bei herkömmlichen Kippsegmentlagern relativ zu dem Rotorkörper in Stellung gebracht und gehalten werden, um die gewünschten Lagerspalte im Betrieb des Kippsegmentlagers zu erzeugen.

Ein weiteres bevorzugtes Ausführungsbeispiel des Kippsegmentlagers ist dadurch gekennzeichnet, dass die Kippsegmente als Laschen in dem flächigen, biegsamen Traggebilde ausgeführt sind. Die Laschen haben bei Radiallagern zum Beispiel im Wesentlichen die Gestalt von Rechtecken. Bei Axiallagern haben die Laschen zum Beispiel die Gestalt von Kreisringscheibenausschnitten. Die Laschen sind über mindestens eine einstückige Verbindung an das flächige, biegsame Traggebilde angebunden.

Ein weiteres bevorzugtes Ausführungsbeispiel des Kippsegmentlagers ist dadurch gekennzeichnet, dass mindestens eines der Kippsegmente in einem bezogen auf das Kippsegment zentralen Bereich einstückig mit dem flächigen, biegsamen Traggebilde verbunden ist. Das liefert unter anderem den Vorteil, dass eine Änderung der im Betrieb auftretenden Flächenpressung zwischen den Kippsegmenten und dem Rotorkörper nicht zu einer Winkeländerung zwischen dem Kippsegment und dem Rotorkörper führt. Durch die einstückige Verbindung mit dem zentralen Bereich des jeweiligen Kippsegments kann die Nachgiebigkeit und Verkippung des Kippsegments weitgehend von dem flächigen, biegsamen Traggebilde entkoppelt werden.

Ein weiteres bevorzugtes Ausführungsbeispiel des Kippsegmentlagers ist dadurch gekennzeichnet, dass mindestens eines der Kippsegmente an einer Verbindungsstelle durch mindestens ein Drehgelenk mit dem flächigen, biegsamen Traggebilde verbunden ist. Über das Drehgelenk kann das jeweilige Kippsegment auf einfache Art und Weise in einem gewünschten Winkel relativ zu dem flächigen, biegsamen Traggebilde und/oder dem Rotorkörper angeordnet werden. Über zwei Drehgelenke wird die Gestaltungsfreiheit im Hinblick auf eine gewünschte Anordnung der Kippsegmente relativ zu dem flächigen, biegsamen Traggebilde und/oder dem Rotorkörper noch einmal weiter vergrößert.

Ein weiteres bevorzugtes Ausführungsbeispiel des Kippsegmentlagers ist dadurch gekennzeichnet, dass mindestens eines der Kippsegmente an mindestens eine Hilfsverbindungsstelle einstückig mit dem flächigen, biegsamen Traggebilde verbunden ist. Die Hilfsverbindungsstelle dient vorteilhaft dazu, die Stabilität des flächigen, biegsamen Traggebildes mit den Kippsegmenten vor dem Einbau in den Gehäusekörper zu erhöhen. Vor dem Einbau in den Gehäusekörper beziehungsweise vor der Inbetriebnahme des Kippsegmentlagers wird die Verbindung an der Hilfsverbindungsstelle entfernt beziehungsweise getrennt.

Die Erfindung betrifft darüber hinaus ein Verfahren zum Herstellen und/oder zum Betreiben eines vorab beschriebenen Kippsegmentlagers. Als Ausgangsmaterial bei der Herstellung des flächigen, biegsamen Traggebildes mit den Kippsegmenten wird zum Beispiel ein Stahlmaterial, ein Messingmaterial, ein Rotgussmaterial oder ein Lagermetallmaterial verwendet. Auch Verbundmaterialien können zum Einsatz kommen, zum Beispiel Stahlblech mit Hartschichten, die zum Beispiel durch Plattieren, thermisches Spritzen oder Schweißverfahren aufgetragen werden. Durch die Wahl eines entsprechenden Werkstoffs kann die Haltbarkeit beziehungsweise Verschleißbeständigkeit beeinflusst werden, was zum Beispiel bei häufigen Starts-/Stopp-Vorgängen im Betrieb des Kippsegmentlagers hilfreich ist. Über einen Biege- beziehungsweise Stanz- und Prägeprozess in Verbindung mit einer Trennbearbeitung durch Laserschneiden oder Wasserstrahlschneiden kann eine gewünschte Geometrie der Kippsegmente in dem flächigen, biegsamen Traggebilde und den einstückigen Verbindungen zwischen den Kippsegmenten und dem flächigen, biegsamen Traggebilde für das Kippsegmentlager hergestellt werden. Eine hohe Oberflächenhärte kann, sofern nötig, durch eine Wärmebehandlung, zum Beispiel durch Vergüten oder Randschichthärten, beziehungsweise durch eine Beschichtung, insbesondere durch eine Nickelbeschichtung oder eine Kohlenstoffbeschichtung, realisiert werden. Bei Radiallagern kann das flächige, biegsame Traggebilde mit den ausgeschnittenen Kippsegmenten, die auch als Lagerpads bezeichnet werden, als federnde, offene Hülse in den Gehäusekörper eingepresst werden. Das flächige, biegsame Traggebilde mit den Kippsegmenten kann aber auch vor dem Einsetzen oder Einpressen in den Gehäusekörper zu einer geschlossenen Hülse verschweißt werden. Eine hohe Genauigkeit der Kippsegmente, insbesondere der Lagerpads, kann durch Schleifprozesse erreicht werden. Zusätzlich kann die Oberfläche der Lagerstellen strukturiert werden, um die Lagereigenschaften zu verbessern. So können zum Beispiel Mikrostrukturen, Taschen oder Spiralrillen in die Oberfläche der Kippsegmente eingebracht werden. Alle beanspruchten Kippsegmentlager zeichnen sich unter anderem dadurch aus, dass es in den Lagerspalten keilförmige sich verjüngende Flächen gibt, zwischen denen und dem drehenden Rotorkörper, insbesondere einer sich drehenden Welle, sich ein Fluidfilm aufbaut, der den Rotorkörper, insbesondere die Welle, trägt, so dass im Betrieb keine Berührung stattfindet. Mit steigender Drehzahl können sich die Keilwinkel, insbesondere in Abhängigkeit von einer Drehsteifigkeit der einstückigen Verbindung zwischen dem jeweiligen Kippsegment und dem flächigen, biegsamen Traggebilde, verändern. So können die Kippsegmente oder Lagerpads je nach Last mehr oder weniger nachgeben.

Die Erfindung betrifft darüber hinaus einen Verdichter mit einer angetriebenen Welle, die durch mindestens ein vorab beschriebenes Kippsegmentlager gelagert ist. Die flächigen, biegsamen Traggebilde mit den Kippsegmenten können an sich bei allen Kippsegmentlagern für schnelldrehende Rotoren, insbesondere bei Turbomaschinen und Verdichtern, eingesetzt werden.

Weitere Vorteile, Merkmale und Einzelheiten der Erfindung ergeben sich aus der nachfolgenden Beschreibung, in der unter Bezugnahme auf die Zeichnung verschiedene Ausführungsbeispiele im Einzelnen beschrieben sind.

### Kurze Beschreibung der Zeichnung

### Es zeigen:

Figur 1 eine perspektivische Darstellung eines flächigen, biegsamen Traggebildes mit drei Kippsegmenten in Gestalt einer geschlossenen Hülse;
Figur 2 das flächige, biegsame Traggebilde aus Figur 1 in einer Vorderansicht gemäß einem erfindungsgemäßen Ausführungsbeispiel;
Figur 3 eine perspektivische Darstellung des flächigen, biegsamen Traggebildes aus den Figuren 1 und 2 vor einem Umformvorgang;
Figur 4 eine ähnliche Darstellung wie in Figur 1 gemäß einer nicht erfindungsgemäßen Ausführungsform;
Figur 5 eine vergrößerte Darstellung eines Ausschnitts aus Figur 4;
Figur 6 das flächige, biegsame Traggebilde aus den Figuren 4 und 5 in einem Ausgangszustand;
Figur 7 eine ähnliche Darstellung wie in den Figuren 1 und 4 gemäß einem weiteren erfindungsgemäßen Ausführungsbeispiel;
Figur 8 das flächige, biegsame Traggebilde aus Figur 7 im Ausgangszustand;
Figur 9 ein flächiges, biegsames Traggebilde zur Anordnung in einem Axiallager gemäß einem erfindungsgemäßen Ausführungsbeispiel;
Figur 10 das flächige, biegsame Traggebilde aus Figur 9 in einer Vorderansicht;
Figur 11 eine Variante des flächigen, biegsamen Traggebildes aus Figur 9;
Figur 12 eine ähnliche Darstellung wie in den Figuren 9 und 11 gemäß einer nicht erfindungsgemäßen Ausführungsform;
Figur 13 einen vergrößerten Ausschnitt aus Figur 12;
Figur 14 eine ähnliche Darstellung wie in den Figuren 9, 11 und 12 gemäß einem weiteren erfindungsgemäßen Ausführungsbeispiel;
Figur 15 einen Ausschnitt aus Figur 14 in einer vergrößerten Darstellung;
Figur 16 ein flächiges, biegsames Traggebilde, wie es in Figur 1 dargestellt ist, mit zwei zusätzlichen Hilfsverbindungsstegen; und
Figur 17 eine schematische Darstellung eines Verdichters mit einer Welle, die durch drei Kippsegmentlager radial und axial drehbar gelagert ist.

### Beschreibung der Ausführungsbeispiele

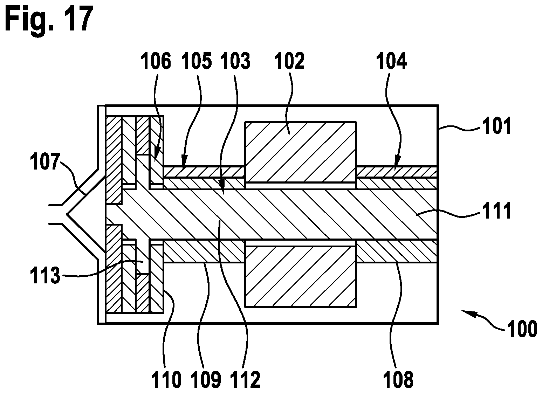

In Figur 17 ist ein Verdichter 100 eines Brennstoffzellensystems schematisch dargestellt. Der Verdichter 100 umfasst ein Gehäuse 101, in welchem ein Elektromotor 102 angeordnet ist. Der Elektromotor 102 dient zum Antrieb einer Welle 103 des Verdichters 100.

Die Welle 103 des Verdichters 100 ist mit Hilfe von zwei Kippsegmentlagern 104, 105 radial in dem Gehäuse 101 gelagert. Zur axialen Lagerung der Welle 103 dient ein Kippsegmentlager 106.

An dem in Figur 17 linken Ende der Welle 103 ist ein Verdichterrad 107 angebracht. Das Verdichterrad 107 dient zur Verdichtung von Luft, die in dem Brennstoffzellensystem bereitgestellt wird, wenn das Verdichterrad 107 über die Welle 103 durch den Elektromotor 102 angetrieben wird.

Die Kippsegmentlager 104, 105; 106 umfassen jeweils einen Gehäusekörper 108, 109; 110. Die Welle 103 umfasst zwei Wellenabschnitte, die auch als Rotorkörper 111, 112 bezeichnet werden, mit denen die Welle 103 in den Kippsegmentlagern 104, 105 radial gelagert ist.

Die Welle 103 umfasst darüber hinaus einen Wellenbund, der auch als Rotorkörper 113 bezeichnet wird. Über den Rotorkörper 113 ist die Welle 103 durch das Kippsegmentlager 106 axial in dem Gehäuse 101 gelagert.

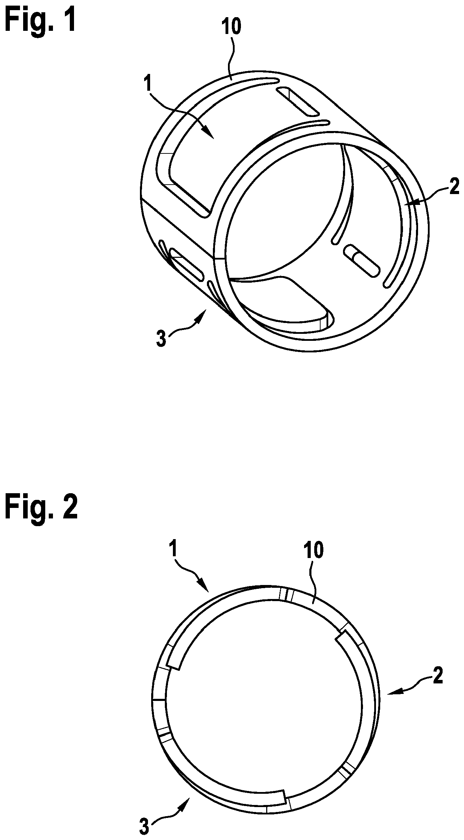

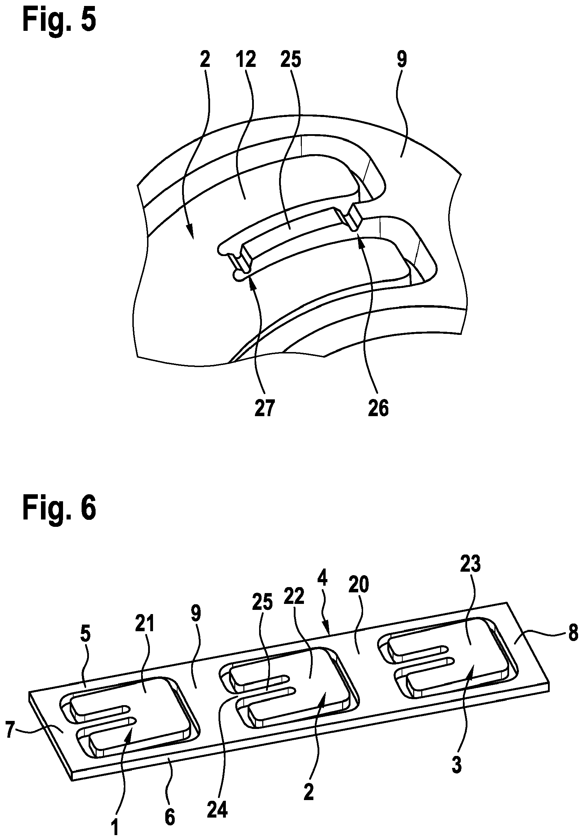

Die Kippsegmentlager 104, 105 umfassen jeweils drei Kippsegmente 1, 2, 3. Im Unterschied zu herkömmlichen Kippsegmenten sind die Kippsegmente 1, 2, 3 einstückig mit einem Rahmen 4 eines flächigen, biegsamen Traggebildes 10; 20; 30 verbunden. Zur Bezeichnung gleicher oder ähnlicher Teile werden in den Figuren 1 bis 8; 9 bis 15 die gleichen Bezugszeichen verwendet. Zunächst werden die Gemeinsamkeiten der verschiedenen Ausführungsbeispiele der Figuren 1 bis 8; 9 bis 15 beschrieben. Danach wird auf deren Unterschiede eingegangen.

Der Rahmen 4 hat zur Realisierung von Radiallagern in den Figuren 1 bis 8 die Gestalt eines Rechtecks mit zwei Längsstegen 5, 6, die an ihren freien Enden durch Querstege 7, 8 miteinander verbunden sind. Darüber hinaus sind die beiden Längsstege 5, 6 durch zwei Verbindungsstege 9 einstückig miteinander verbunden.

Die Kippsegmente 1, 2, 3 sind als Laschen oder Lagerpads 11, 12, 13; 21, 22, 23; 31, 32, 33 aus dem flächigen, biegsamen Traggebilde 10; 20; 30 herausgetrennt. Dabei sind die Lagerpads 11, 12, 13; 21, 22, 23; 31, 32, 33 an mindestens einer Stelle einstückig mit dem Rahmen 4 verbunden.

In den dargestellten Ausführungsbeispielen sind die Lagerpads 11, 12, 13; 21, 22, 23; 31, 32, 33 jeweils auf die gleiche Art und Weise in das zugehörige flächige, biegsame Traggebilde 10; 20; 30 eingebunden. Anders als dargestellt, können aber auch in einem flächigen, biegsamen Traggebilde unterschiedliche Anbindungsarten miteinander kombiniert werden.

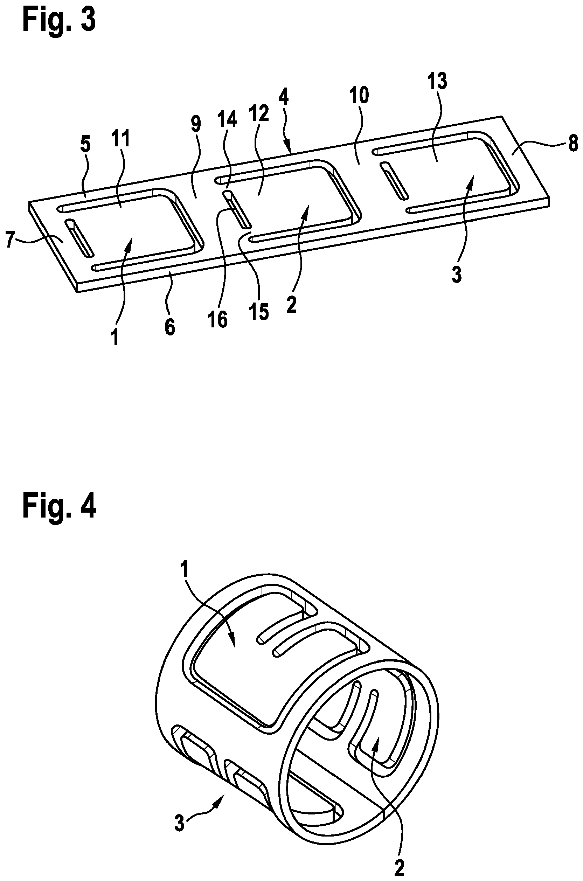

In den Figuren 1 bis 3 sind die Lagerpads 11 bis 13 erfindungsgemäß durch jeweils zwei einstückige Verbindungen 14, 15 in das flächige, biegsame Traggebilde 10 eingebunden. Die einstückigen Verbindungen 14, 15 sind, wie man in Figur 3 sieht, als Biegebalken ausgeführt. Zwischen den beiden einstückigen Verbindungen 14, 15 ist eine Ausnehmung 16 in Gestalt eines Langlochs parallel zu den Verbindungsstegen 9 vorgesehen.

In den Figuren 4 bis 6 ist eine nicht erfindungsgemäße Ausführungsform dargestellt bei der pro Lagerpad 21 bis 23 jeweils eine einstückige Verbindung 24 mit dem flächigen, biegsamen Traggebilde 20 vorgesehen ist. Die einstückige Verbindung 24 ist als Biegebalken 25 mit zwei Festkörpergelenken 26, 27 ausgeführt. Die Festkörpergelenke 26, 27 dienen zur Darstellung von Drehgelenken. Über den Biegebalken 25 ist der Verbindungssteg 9 einstückig mit einem zentralen oder mittleren Bereich des Lagerpads 12 verbunden.

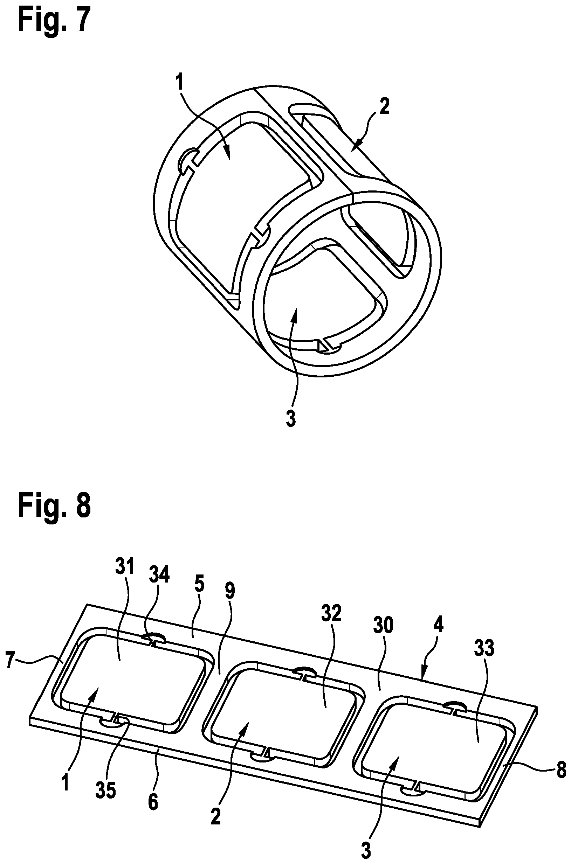

Bei dem in den Figuren 7 und 8 dargestellten erfindungsgemäßen Ausführungsbeispiel sind die Lagerpads 31 bis 33 durch jeweils zwei Torsionsbalken 34, 35 in das flächige, biegsame Traggebilde 30 eingebunden. In der Kombination von Biege- und Torsionsstrukturen lassen sich viele weitere (nicht dargestellte) Geometrien darstellen.

Die flächigen, biegsamen Traggebilde 10; 20; 30 können zum Beispiel durch Prägen erzeugt werden. Das Prägen kann im flachen Zustand der flächigen, biegsamen Traggebilde 10; 20; 30 erfolgen. Alternativ kann das Prägen in einem aufgerollten Zustand, zum Beispiel unter der Verwendung von Abstützwerkzeugen, durchgeführt werden. Die Abstützwerkzeuge können von beiden Seiten gesteckt werden, während der Prägestempel oder die Prägestempel die Tragarme, zum Beispiel die Biegebalken oder Torsionsbalken, die zur Darstellung der einstückigen Verbindungen dienen, radial nach innen presst beziehungsweise pressen.

Das als Axiallager ausgeführte Kippsegmentlager 106 umfasst zum Beispiel sechs Kippsegmente 41 bis 46 oder acht Kippsegmente 41 bis 48. Die Kippsegmente 41 bis 48 sind als Lagerpads 54; 64; 74 ausgeführt und durch zwei einstückige Verbindungen in ein flächiges, biegsamen Traggebilde 50; 60; 70 eingebunden. Die flächigen, biegsamen Traggebilde 50; 60; 70 haben die Gestalt von Kreisringscheiben mit einer Innenringscheibe 55 und einer Außenringscheibe 56. Zwischen zwei gleich ausgeführten Lagerpads 54; 64; 74, die zur Darstellung der Kippsegmente 41 bis 48 dienen, ist jeweils ein Speichenkörper 49 angeordnet. Die insgesamt sechs beziehungsweise acht Speichenkörper 49 verbinden die Innenringscheibe 55 einstückig mit der Außenringscheibe 56 des jeweiligen flächigen, biegsamen Traggebildes 50; 60; 70.

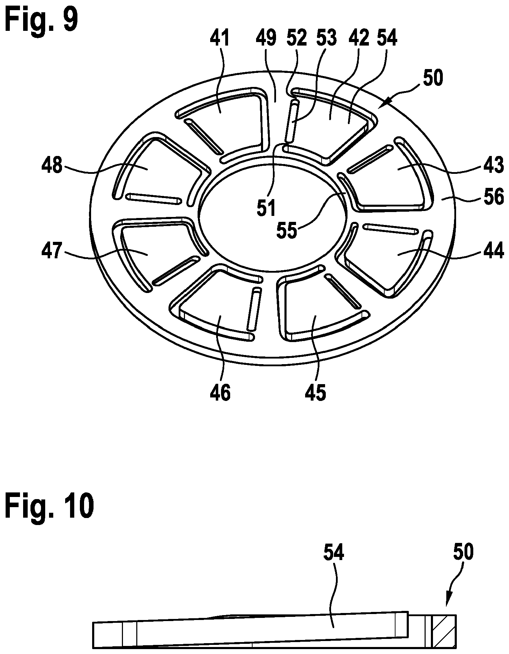

In den Figuren 9 und 10 sind insgesamt acht Kippsegmente 41 bis 48 über jeweils zwei einstückige Verbindungen 51, 52 mit dem Speichenkörper 49 des flächigen, biegsamen Traggebildes 50 verbunden. Zwischen den beiden einstückigen Verbindungen 51, 52, die als Biegebalken ausgeführt sind, ist jeweils eine Ausnehmung 53 in dem flächigen, biegsamen Traggebilde 50 vorgesehen.

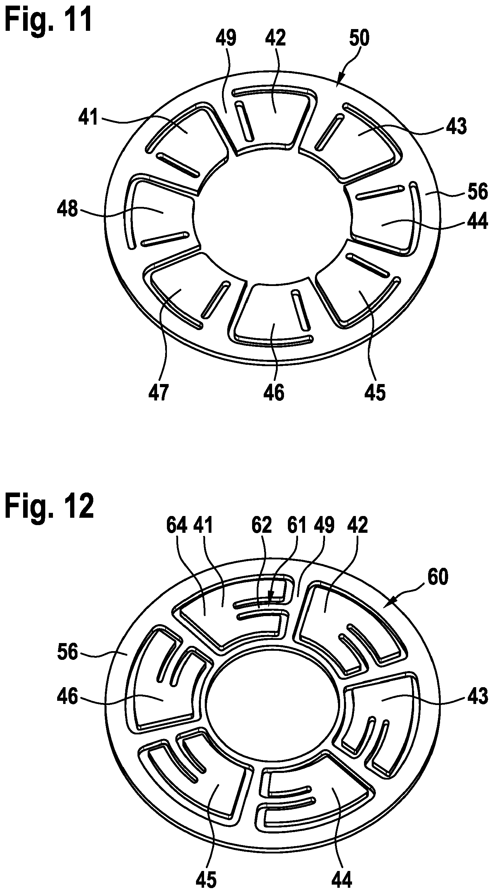

In Figur 11 ist eine Variante zu Figur 9 dargestellt. In der Variante der Figur 11 wurde die Innenringscheibe (55 in Figur 9) weggelassen. Ansonsten sind die Ausführungen der Figuren 9 und 11 identisch.

In den Figuren 10; 13; 15 ist veranschaulicht, dass die Lagerpads 54; 64; 74, die zur Darstellung der Kippsegmente dienen, mit einem Winkel versehen werden, um ein gewünschtes Druckpolster in dem sich ergebenden Lagerspalt aufzubauen. Diese Druckpolster dienen im Betrieb des Kippsegmentlagers dazu, eine unerwünschte Berührung zwischen der Welle beziehungsweise dem Wellenbund und den Lagerpads 54; 64; 74 zu unterbinden.

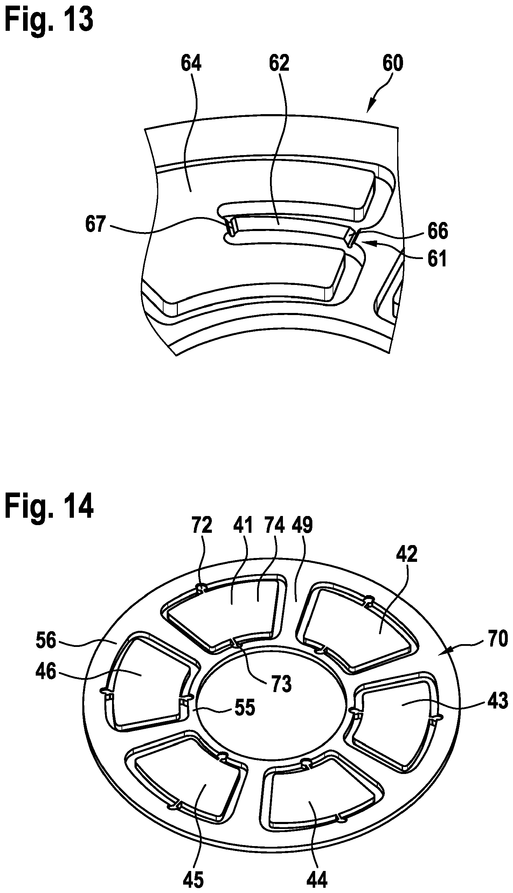

Auch bei den Axiallagern kann die Aufhängung der Lagerpads 64, wie man in der nicht erfindungsgemäßen Ausführungsform der Figuren 12 und 13 sieht, in zentrale Bereiche des jeweiligen Lagerpads 64 verlagert werden. In der vergrößerten Darstellung der Figur 13 sieht man, dass mit Hilfe von Festkörpergelenken 66, 67 eine quasi gelenkige Aufhängung der Lagerpads 64 in dem flächigen, biegsamen Traggebilde 60 ermöglicht wird.

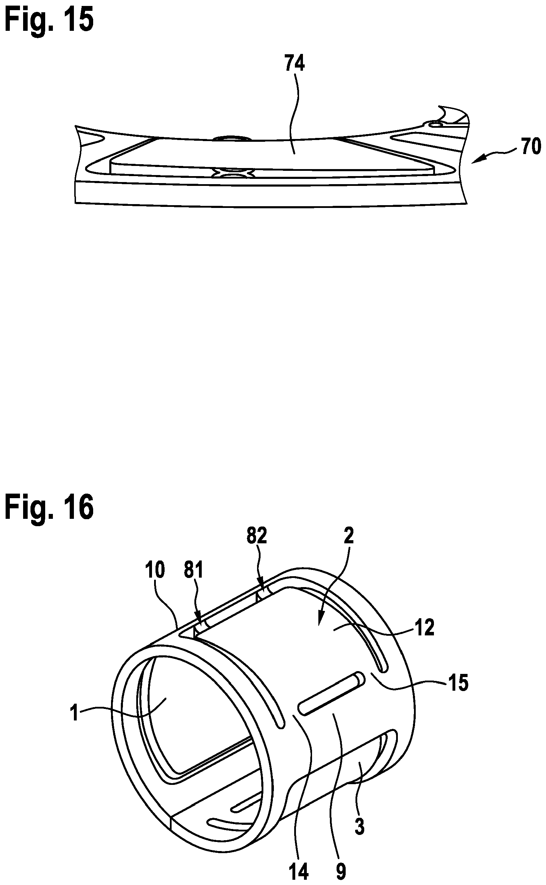

In den Figuren 14 und 15 sieht man, dass die Lagerpads 74 auch mit Hilfe von jeweils zwei Torsionsbalken 72, 73 in das flächige, biegsame Traggebilde 70 eingebunden werden können. Die zur Darstellung der Aufhängung über Torsionsbalken 72, 73 benötigten einstückigen Verbindungen zwischen Lagerpad 74 und den Ringscheiben 55, 56 sind fertigungstechnisch zum Beispiel durch Prägen einfach realisierbar. Die Aufhängung, Anbindung oder Einbindung der Lagerpads 74 kann je nach Bedarf auch außerhalb deren Mitte liegen.

In Figur 16 ist dargestellt, dass für die Feinbearbeitung zusätzlich zu den einstückigen Verbindungen 14, 15 in Figur 1 auch Hilfsstege 81, 82 vorgesehen werden, durch welche das zugehörige Lagerpad 12 zusätzlich an zwei Stellen einstückig mit dem Rahmen 4 verbunden wird. Die Hilfsstege 81, 82 können nach der Bearbeitung, beispielsweise in einem Glühprozess, durchtrennt werden, insbesondere mit Hilfe eines Lasers.

## Patentansprüche

1. Kippsegmentlager (104,105;106) mit Kippsegmenten (1-3;41-48) und einem Gehäusekörper (108,109;110), wobei die Kippsegmente (1-3;41-48) relativ zu dem Gehäusekörper (108,109;110) kippbar sind, um zwischen den Kippsegmenten (1-3;41-48) und einem Rotorkörper (11,112;113) Lagerspalte zu erzeugen, wobei die Kippsegmente (1-3;41-48) einstückig mit einem flächigen, biegsamen Traggebilde (10;20;30;50;60;70) verbunden sind, **dadurch gekennzeichnet, dass** mindestens eines der Kippsegmente (1-3;41-48) an mehr als einer Verbindungsstelle (14,15;51,52) einstückig mit dem flächigen, biegsamen Traggebilde (10;30;50) verbunden ist.

2. Kippsegmentlager nach Anspruch 1, **dadurch gekennzeichnet, dass** die einstückige Verbindung (14,15;24;51,52;61) zwischen den Kippsegmenten (1-3;41-48) und dem flächigen, biegsamen Traggebilde (10;20;50;60) mindestens einen Biegebalken (25) umfasst.

3. Kippsegmentlager nach einem der vorhergehenden Ansprüche, **dadurch gekennzeichnet, dass** die einstückige Verbindung zwischen den Kippsegmenten (1-3;41-48) und dem flächigen, biegsamen Traggebilde (30;70) mindestens einen Torsionsbalken (34,35;72,73) umfasst.

4. Kippsegmentlager nach einem der vorhergehenden Ansprüche, **dadurch gekennzeichnet, dass** das flächige, biegsame Traggebilde (10;20;30;50;60;70) aus einem Blechmaterial gebildet ist.

5. Kippsegmentlager nach einem der vorhergehenden Ansprüche, **dadurch gekennzeichnet, dass** die Kippsegmente (1-3;41-48) so versetzt an das flächige, biegsame Traggebilde (10;20;30;50;60;70) angebunden sind, dass im Betrieb des Kippsegmentlagers (104,105;106) nur die Kippsegmente (1-3;41-48) den Rotorkörper (111,112;113) tragen.

6. Kippsegmentlager nach einem der vorhergehenden Ansprüche, **dadurch gekennzeichnet, dass** die Kippsegmente (1-3;41-48) als Laschen in dem flächigen, biegsamen Traggebilde (10;20;30;50;60;70) ausgeführt sind.

7. Kippsegmentlager nach einem der vorhergehenden Ansprüche, **dadurch gekennzeichnet, dass** mindestens eines der Kippsegmente (1-3;41-48) in einem bezogen auf das Kippsegment (1-3;41-48) zentralen Bereich einstückig mit dem flächigen, biegsamen Traggebilde (20;60) verbunden ist.

8. Kippsegmentlager nach einem der vorhergehenden Ansprüche, **dadurch gekennzeichnet, dass** mindestens eines der Kippsegmente (1-3;41-48) an einer Verbindungsstelle durch mindestens ein Drehgelenk (26,27;66,67) mit dem flächigen, biegsamen Traggebilde (20;60) verbunden ist.

9. Verdichter (100) mit einer angetriebenen Welle (103), die durch mindestens ein Kippsegmentlager (10;20;30;50;60;70) nach einem der vorhergehenden Ansprüche gelagert ist.

## Claims

1. Tilting-pad bearing (104, 105; 106) having tilting pads (1-3; 41-48) and a housing body (108, 109; 110), wherein the tilting pads (1-3; 41-48) are tiltable relative to the housing body (108, 109; 110) so as to generate bearing gaps between the tilting pads (1-3; 41-48) and a rotor body (11, 112; 113), wherein the tilting pads (1-3; 41-48) are integrally connected to a planar, flexural support structure (10; 20; 30; 50; 60; 70), **characterized in that** at least one of the tilting pads (1-3; 41-48) is integrally connected to the planar, flexural support structure (10; 30; 50) at more than one connection point (14, 15; 51, 52).

2. Tilting-pad bearing according to Claim 1, **characterized in that** the integral connection (14, 15; 24; 51, 52; 61) between the tilting pads (1-3; 41-48) and the planar, flexural support structure (10; 20; 50; 60) comprises at least one bending beam (25) .

3. Tilting-pad bearing according to either of the preceding claims, **characterized in that** the integral connection between the tilting pads (1-3; 41-48) and the planar, flexural support structure (30; 70) comprises at least one torsion beam (34, 35; 72, 73) .

4. Tilting-pad bearing according to one of the preceding claims, **characterized in that** the planar, flexural support structure (10; 20; 30; 50; 60; 70) is formed from a sheet-metal material.

5. Tilting-pad bearing according to one of the preceding claims, **characterized in that** the tilting pads (1-3; 41-48) are attached to the planar, flexural support structure (10; 20; 30; 50; 60; 70) in an offset manner such that only the tiling pads (1-3; 41-48) support the rotor body (111, 112; 113) during the operation of the tilting-pad bearing (104, 105; 106).

6. Tilting-pad bearing according to one of the preceding claims, **characterized in that** the tilting pads (1-3; 41-48) are embodied as tabs in the planar, flexural support structure (10; 20; 30; 50; 60; 70) .

7. Tilting-pad bearing according to one of the preceding claims, **characterized in that** at least one of the tilting pads (1-3; 41-48) is integrally connected to the planar, flexural support structure (20; 60) in a region which is central in terms of the tilting pad (1-3; 41-48).

8. Tilting-pad bearing according to one of the preceding claims, **characterized in that** at least one of the tilting pads (1-3; 41-48) at one connection point is connected to the planar, flexural support structure (20; 60) by at least one rotary joint (26, 27; 66, 67) .

9. Compressor (100) having a driven shaft (103) which is mounted by at least one tilting-pad bearing (10; 20; 30; 50; 60; 70) according to one of the preceding claims.

## Revendications

1. Palier à patins oscillants (104, 105 ; 106) comprenant des patins oscillants (1-3 ; 41-48) et un corps de boîtier (108, 109 ; 110), les patins oscillants (1-3 ; 41-48) pouvant osciller par rapport au corps de boîtier (108, 109 ; 110) afin de générer une fente de palier entre les patins oscillants (1-3 ; 41-48) et un corps de rotor (11, 112 ; 113), les patins oscillants (1-3 ; 41-48) étant reliés d'un seul tenant avec un produit porteur (10 ; 20 ; 30 ; 50 ; 60 ; 70) plat flexible, **caractérisé en ce qu'**au moins l'un des patins oscillants (1-3 ; 41-48) est relié d'un seul tenant avec le produit porteur (10 ; 30 ; 50) plat flexible en plus d'un point de liaison (14, 15 ; 51, 52).

2. Palier à patins oscillants selon la revendication 1, **caractérisé en ce que** la liaison d'un seul tenant (14, 15 ; 51, 52 ; 61) entre les patins oscillants (1-3 ; 41-48) et le produit porteur (10 ; 20 ; 50 ; 60) plat flexible comporte au moins une barre flexible (25).

3. Palier à patins oscillants selon l'une des revendications précédentes, **caractérisé en ce que** la liaison d'un seul tenant entre les patins oscillants (1-3 ; 41-48) et le produit porteur (30 ; 70) plat flexible comporte au moins une barre de torsion (34, 35 ; 72, 73).

4. Palier à patins oscillants selon l'une des revendications précédentes, **caractérisé en ce que** le produit porteur (10 ; 20 ; 30 ; 50 ; 60 ; 70) plat flexible est formé à partir d'un matériau en tôle.

5. Palier à patins oscillants selon l'une des revendications précédentes, **caractérisé en ce que** les patins oscillants (1-3 ; 41-48) sont raccordés décalés au produit porteur (10 ; 20 ; 30 ; 50 ; 60 ; 70) plat flexible de telle sorte que lors du fonctionnement du palier à patins oscillants (104, 105 ; 106), seuls les patins oscillants (1-3 ; 41-48) portent le corps de rotor (111, 112 ; 113).

6. Palier à patins oscillants l'une des revendications précédentes, **caractérisé en ce que** les patins oscillants (1-3 ; 41-48) sont réalisés sous la forme de languettes dans le produit porteur (10 ; 20 ; 30 ; 50 ; 60 ; 70) plat flexible.

7. Palier à patins oscillants l'une des revendications précédentes, **caractérisé en ce qu'**au moins l'un des patins oscillants (1-3 ; 41-48) est relié d'un seul tenant au produit porteur (20 ; 60) plat flexible dans une zone centrale par rapport au patin oscillant (1-3 ; 41-48) .

8. Palier à patins oscillants l'une des revendications précédentes, **caractérisé en ce qu'**au moins l'un des patins oscillants (1-3 ; 41-48) est relié au produit porteur (20 ; 60) plat flexible au niveau d'un point de liaison par au moins une articulation tournante (26, 27 ; 66, 67) .

9. Compresseur (100) comprenant un arbre (103) entraîné, lequel est monté par au moins un palier à patins oscillants (10 ; 20 ; 30 ; 50 ; 60 ; 70) selon l'une des revendications précédentes.
